# EUROPEAN PATENT APPLICATION

(11) **EP 1 854 702 A2**
(43) Date of publication of application: **14.11.2007**
(21) Application number: 07007799.5
(22) Date of filing: 17.04.2007
(51) Int. Cl.: B62D 5/22

(54) **Sealing part structure of hydraulic power steering apparatus**

(30) Priority: 11.05.2006 KR 20060042338
(71) Applicant: Mando Corporation, Pyeongtaek-si, Gyeonggi-do (KR)
(72) Inventor: Park, Jung Sik, Wonju Si Gangwon-Do (KR); Sung, Moo Heo, Wonju Si Gangwon-Do (KR)
(74) Representative: Winkler, Andreas Fritz Ernst

(57) **Abstract**

Disclosed is a sealing part structure (300) of a cylinder tube disposed in a hydraulic power steering apparatus. The sealing part structure (300) includes an oil seal (310) for preventing leakage of power steering oil; a DU bushing (320) for guiding a reciprocal movement of a rack bar in a leftward and rightward direction; a rack bush (330) for absorbing a shock from a piston disposed in the rack bar; a stop ring (340) for fixing the rack bush (330) to a cylinder tube. According to the present invention, the number of parts is reduced, thereby simplifying an assembling process as well as reducing a manufacturing cost thereof so as to improve productivity.

## Description

### Field of the invention

The present invention relates to an assembling structure of a rack bush and a rack stopper of a hydraulic power steering apparatus, and more particularly, to an assembling structure of a rack bush and a rack stopper of a hydraulic power steering apparatus, which reduces the number of parts and simplifies an assembling process thereof by simplifying the assembling structure of the rack bush and the rack stopper which are inserted into an interior of a cylinder tube and fixed thereto.

### BACKGROUND OF THE INVENTION

Generally, a vehicular steering apparatus refers to an apparatus which is used to alter a direction of a vehicle as desired. In the vehicular steering apparatus, a driver rotates a steering wheel so as to transfer a rotational force of a steering shaft to the vehicular steering apparatus, thereby altering a direction of a vehicle as desired. Such vehicular steering apparatuses are largely classified into electric power steering apparatuses and hydraulic power steering apparatuses.

The electric power steering apparatuses provide flexible steering power of a steering wheel by using a rotational force of a motor when a vehicle is stooped or at a low speed, and provide tight steering power of a steering wheel at a high speed, depending on a running speed, thereby providing a driver with stability while driving at a high speed.

On the other hand, the hydraulic power steering apparatuses drive a power steering pump by using a driving force of an engine, and selectively pour power steering oil, which is output from the power steering pump, into a cylinder. Therefore, the hydraulic power steering apparatuses provide flexible steering power when a vehicle is stooped or at a low speed, and provide tight steering power at a high speed, thereby providing a driver with stability while driving at a high speed.

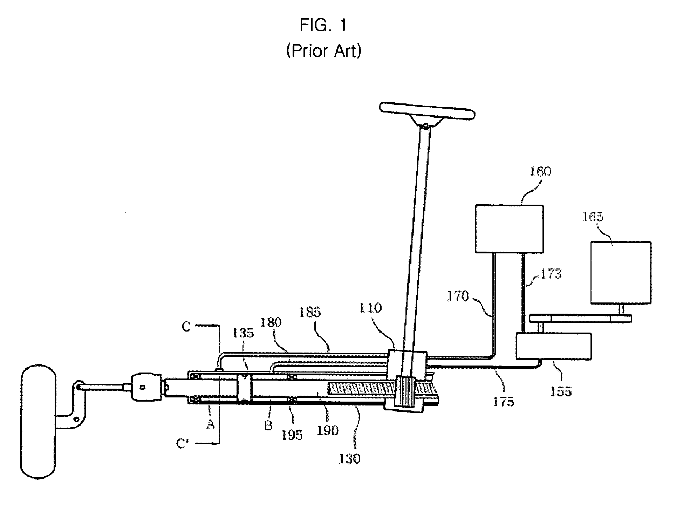

FIG. 1 is a schematic view showing a normal structure of a hydraulic power steering apparatus.

In the hydraulic power steering apparatus, power energy generated in an engine 165 is transferred to a power steering pump 155, power steering oil stored in a power steering oil tank 160 is sucked via a suction channel 173, and then, the power steering oil is supplied to a control valve housing 110 via a supply channel 175.

Elements of the hydraulic power steering apparatus can be divided into front part elements and rear part elements, based on the control valve housing 110. Then, the front part elements include the supply channel 175 through which power steering oil supplied from the power steering pump 155 passes, the power steering pump 155 supplying the power steering oil to the supply channel 175 and a return channel 170 through which the power steering oil supplied via the supply channel 175 is returned, the engine 165 providing the power steering pump 155 with a driving force. The front part elements include the suction channel 173 through which the power steering pump 155 sucks the power steering oil, and the power steering oil tank 160 having a side thereof connected to the return channel 170 and the other side thereof connected to the suction channel 173, so that returned power steering oil stays temporarily in the power steering oil tank 160 before being poured into the suction channel 173.

On the other hand, the rear part elements include a cylinder tube 130 which encloses the rack bar 190 and guides a reciprocal movement of the rack bar 190 in a leftward and rightward direction in an outer circumferential surface of the rack bar 190, a piston 135 of a ring-shape has an inner circumference surface thereof fixed to the outer circumference surface of the rack bar 190, and an outer circumference surface thereof, in which a relative piston movement is performed with respect to an inner circumference surface of the cylinder tube 130 while the rack bar 190 moves reciprocally in the leftward and rightward direction. The rear part elements include sealing parts 195 positioned at both left and right sides of the piston 135, respectively, along a longitudinal direction of the cylinder tube 130, so as to be fixed to the cylinder tube 130, the sealing part parts 195 having a contact with the rack bar 190 and enclosing it while the rack bar 190 moves reciprocally in the leftward and rightward direction, so as to prevent leakage of power steering oil. The rear part elements include a left cylinder A and a right cylinder B, which are formed in the cylinder tube 130 between the sealing parts 195 positioned in left and right sides of the piston 135. The left cylinder A is connected to a left channel 185, and the right cylinder B is connected to a right channel 180.

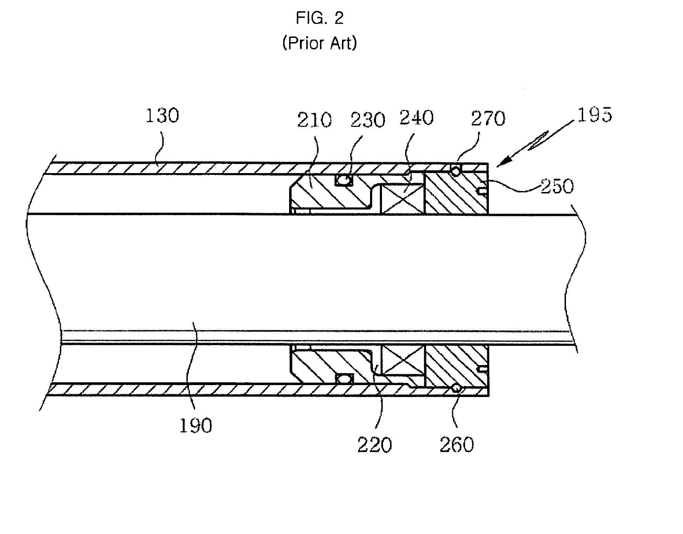

FIG. 2 is a sectional view of a sealing part according to a conventional technique. The conventional sealing part 195 includes a rack bush 210, a Ducol Steel (DU) bushing 220, an O-ring 230, an oil seal 240, a stopper 250 and a circlip 260.

The rack bush 210 performs a function of sucking a shock from the piston 135 provided in the rack bar 190 when the rack bar 190 moves furthest toward each leftward or rightward direction. The DU bushing 220 is made of low manganess steel and is used as metal friction material. The oil seal 240 performs a function for preventing leakage of power steering oil input into/output from an interior of a cylinder tube 130, and the stopper 250 and the circlip 260 perform a function for fixing the sealing part 195 to the cylinder tube 130.

In such sealing part 195, because a fixing member such as the circlip 260 and a plurality of parts required for assembling products are needed, a manufacturing cost thereof increases. In assembling such sealing part 195, the rack bush 210, the DU bushing 220, the O-ring 230, and the oil seal 240 are inserted into the cylinder tube 130, and then, the stopper 250 is inserted into the cylinder tube 130 in such a manner that a circlip 260 fixing hole formed in the stopper 250 faces an insert hole 270 formed in the cylinder tube 130. The circlip 260 is inserted through the insert hole 270 to be temporarily fastened therein, and, in this state, the stopper 250 is rotated by a coupling tool so as to enable the circlip 260 is accurately fastened in the fixing hole. Because of such process, etc., there is a problem in that assembling of the sealing part is difficult.

### SUMMARY OF THE INVENTION

Accordingly, the present invention has been made to solve the above-mentioned problems occurring in the prior art, and the present invention provides a sealing part structure of a hydraulic power steering apparatus, which reduces the number of parts and simplifies an assembling process thereof, by simplifying an assembling structure of a rack bush and a rack stopper which are fixed to an interior of a cylinder tube.

In accordance with an aspect of the present invention, there is provided a sealing part structure of a cylinder tube disposed in a hydraulic power steering apparatus. The sealing part structure includes an oil seal for preventing leakage of power steering oil; a DU bushing for guiding a reciprocal movement of a rack bar in a leftward and rightward direction; a rack bush for absorbing a shock from a piston disposed in the rack bar; and a stop ring for fixing the rack bush to a cylinder tube.

### BRIEF DESCRIPTION OF THE DRAWINGS

The above and other objects, features and advantages of the present invention will be more apparent from the following detailed description taken in conjunction with the accompanying drawings, in which:
FIG. 1 is a schematic view showing a normal structure of a hydraulic power steering apparatus;
FIG. 2 is a sectional view of a sealing part according to the prior art;
FIG. 3A is an exploded perspective view showing the sealing part according to an exemplary embodiment of the present invention; and
FIG. 3B is a perspective view showing the sealing part in an assembled state.

### DETAILED DESCRIPTION OF THE EXEMPLARY EMBODIMENTS

Hereinafter, a preferred embodiment of the present invention will be described with reference to the accompanying drawings. In the following description, the same elements will be designated by the same reference numerals although they are shown in different drawings. Further, in the following description of the present invention, a detailed description of known functions and configurations incorporated herein will be omitted when it may make the subject matter of the present invention rather unclear.

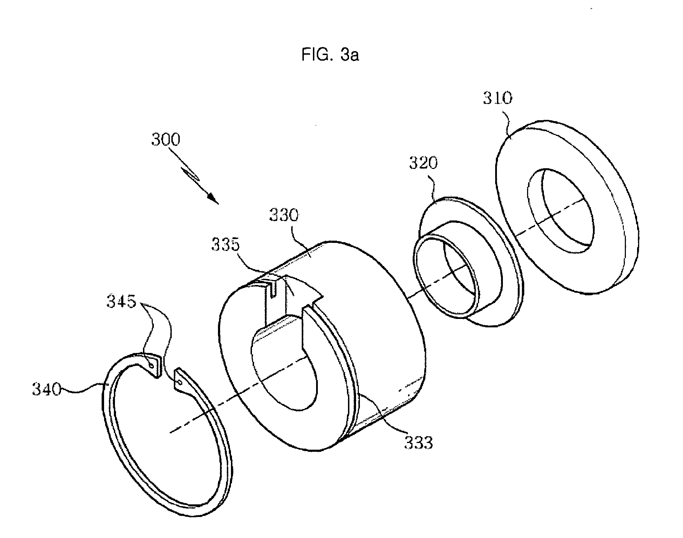

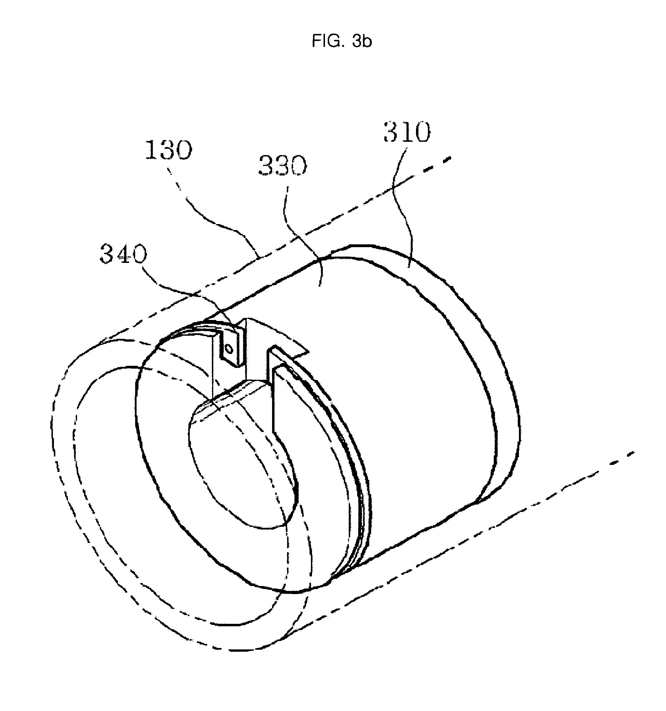

Fig. 3A is an exploded perspective view showing a sealing part according to a preferred embodiment of the present invention, FIG. 3B is a perspective view showing the sealing part in an assembled state, according to the preferred embodiment of the present invention. The sealing part 300 according to the preferred embodiment of the present invention includes an oil seal 310, a DU bushing 320, a rack bush 330, and a stop ring 340.

The oil seal 310 and the DU bushing 320 are same as an oil seal and a DU bushing according to the prior art, respectively. The oil seal 310 is a part for preventing leakage of power steering oil input into/output from a cylinder tube 130. The DU bushing 320 acts as friction material in an axial direction of the rack bar 190, as well as prevents the rack bar 190 from being twisted due to steering load in a circumferential direction of the rack bar 190, so as to guide a reciprocal movement of the rack bar 190 in the leftward and rightward direction.

The rack bush 330 of a pipe-shape has a groove 333 which has a predetermined width and is formed in an outer circumferential surface of an end part of the rack bush 330. The rack bush 330 has a coupling hole 335 formed in a part of the outer circumferential surface in which the groove 333 is provided, in such a manner that the coupling hole 335 extends from the outer circumferential surface of the rack bush 330 to an inner circumferential surface thereof. A stop ring 340 having a configuration of a C-type snap ring is inserted into the groove 333 in such a manner that the mounting holes 345 formed at both ends of the stop ring 340 are located (positioned) in the coupling hole 335.

In a scheme for assembling the elements, which are in the above-described state, in the cylinder tube 130, all of the oil seal 310, the DU busing 320, the rack bush 330, and the stop ring 340 are integrally inserted into the inner circumferential surface of the cylinder tube 130. At this time, since an outer diameter of the stop ring 340 is slightly bigger than an outer diameter of the rack bush 330, a tool is inserted into the mounting holes 345 formed in the stop ring 340, so that the stop ring 340 is closed up, inserted into the groove, and pushed thereto to be fixed in the groove by an elastic force, the groove being formed in an inner circumferential surface of the cylinder tube 270 for allowing a conventional circlip 270 to be inserted into the groove, thereby finishing a procedure of assembling.

As described above, according to the present invention, there is an advantage in that the number of parts is reduced, thereby saving a manufacturing cost thereof as well as simplifying an assembling process so as to improve productivity.

Although an exemplary embodiment of the present invention has been described for illustrative purposes, those skilled in the art will appreciate that various modifications, additions and substitutions are possible, without departing from the scope and spirit of the invention as disclosed in the accompanying claims. Therefore, the embodiment disclosed in the present invention has been described not for limiting the scope of the invention, but for describing the invention. Accordingly, the scope of the invention is not to be limited by the above embodiment but by the claims and the equivalents thereof. It will be understood by those skilled in the art that various changes in form and details may be made therein without departing from the spirit and scope of the invention as defined by the appended claims.

### * DRAWING LEGEND INSERTION *

FIG. 1
300: SEALING PART
310: OIL SEAL
320: DU BUSHING
330: RACK BUSHING
333: GROOVE
335: COUPLING HOLE
340: STOP RING
345: MOUNTING HOLE

## Claims

1. A sealing part structure of a cylinder tube disposed in a hydraulic power steering apparatus, the sealing part structure comprising:
an oil seal for preventing leakage of power steering oil;
a DU bushing for guiding a reciprocal movement of a rack bar in a leftward and rightward direction;
a rack bush for absorbing a shock from a piston disposed in the rack bar; and
a stop ring for fixing the rack bush to a cylinder tube.

2. The sealing part structure as claimed in claim 1, wherein the rack bush has a groove formed in an outer circumferential surface of the rack bush, so as to enable the stop ring to be inserted into the rack bush.

3. The sealing part as claimed in claim 2, wherein the rack bush has an opening formed in a part of the outer circumferential surface in which the groove is formed, so as to assemble/separate the stop ring in/from the groove.
